Europäisches Patentamt

European Patent Office

Office européen des brevets

(11) Veröffentlichungsnummer: **0 111 753**
**A2**

(12) # EUROPÄISCHE PATENTANMELDUNG

(21) Anmeldenummer: 83111401.2

(22) Anmeldetag: 15.11.83

(51) Int. Cl.³: **B 61 L 25/04**
**G 08 G 1/12**

(30) Priorität: 18.11.82 DE 3242551

(43) Veröffentlichungstag der Anmeldung:
27.06.84 Patentblatt 84/26

(84) Benannte Vertragsstaaten:
CH FR GB LI SE

(71) Anmelder: Götting KG

D-3161 Röddensen(DE)

(72) Erfinder: Götting, Hans-Heinrich
Celler Strasse 5
D-3161 Röddensen(DE)

(74) Vertreter: König, Norbert, Dipl.-Phys. Dr.
Patentanwälte Leine & König Burckhardtstrasse 1
D-3000 Hannover 1(DE)

(54) **Anordnung zum Identifizieren eines Objektes.**

(57) Die Erfindung betrifft eine Anordnung zum Identifizieren eines Objektes und zum Ermitteln des Abstandes, beispielsweise eines Fahrzeugs, Maschinenteils oder eines Ortes auf einer Fahrstrecke. Eine Identifizierungseinrichtung strahlt über eine Sendeantenne Energie ab. Ein Kodeträger auf dem Object erhält über eine Empfangsantenne diese Energie und setzt sie um in Betriebsenergie. Der Kodeträger aktiviert einen Kodespeicher. Der Kode wird ausgelesen und die Empfangsantenne dadurch beschaltet. Diese Beschaltung führt an der Sendeantenne der Identifizierungseinrichtung zu einer Feldveränderung und damit zu einer Modulation. Die Modulation kann herausgefiltert, verstärkt und ausgewertet werden. Der Grad der Modulation ist ein Maß für den Abstand zwischen Identifizierungseinrichtung und Kodeträger. In einer besonderen Ausführung ist der Kodespeicherinhalt überschreibbar. Die Anordnung arbeitet bei sehr geringem Aufwand zuverlässig und wartungsfrei.

Fig.1

EP 0 111 753 A2

# LEINE & KÖNIG

## PATENTANWÄLTE

**0111753**

Dipl.-Ing. Sigurd Leine · Dipl.-Phys. Dr. Norbert König

Burckhardtstraße 1
D-3000 Hannover 1

Telefon (05 11) 62 30 05

Götting KG

Unser Zeichen
619/3 EP

Datum
14. November 1983

## Anordnung zum Identifizieren eines Objektes

Die Erfindung betrifft eine Anordnung zum Identifizieren eines Objektes gemäß Oberbegriff des Anspruchs 1.

Es sind bereits Anordnungen zur Identifizierung von Objekten bekannt, beispielsweise durch DE-OS 29 19 753, DE-OS 29 2o 263 und DE-OS 28 21 299. Insbesondere im Eisenbahnwesen sind durch die Firmen SEL, Siemens und Philips solche Identifizierungssysteme bekannt geworden, so durch die deutschen Auslegeschriften 29 o5 648 und 28 41 269. Bei einigen dieser Systeme wird von einem Kodeidentifizierer oder -leser elektromagnetische Energie abgestrahlt, um die notwendige Betriebsenergie in dem Kodeträger bzw. Antwortgerät zu erzeugen. Anschließend wird der Kode aus dem Kodespeicher freigegeben. Dieser Kode moduliert einen Sender. Meistens ist die Frequenz des Kodesenders eine andere als die des Energiesenders der Identifizierungseinrichtung. Es können aber auch beide Sendungen nacheinander erfolgen. Dann können die Frequenzen gleich sein.

Außer den bisher beschriebenen Systemen gibt es auch noch die Möglichkeit, den Kodeträger mit Resonatoren auszustatten und den Kodeidentifizierer zu wobbeln. Durch die verschiedenen Resonanzfrequenzen des Kodeträgers kann dieser eindeutig identifiziert werden. Dieses System arbeitet vorwiegend im dm- oder cm-Wellenbereich. Bei diesen Frequenzen können die Resonatoren entsprechend klein gebaut werden. Diese Technik ist durch die Patentschrift 27 15 o21 sowie Berichte in Fachzeitschriften hinreichend bekannt. Insbesondere die bekannten Einrichtungen von Siemens zum Lesen, Melden und Fernübertragen von Waggonnummern oder Blockabschnitten bei der Bahn nutzen dieses System.

Desweiteren sind auch Systeme zur Standort- oder Standlinienbestimmung vertreitet. Die einzelnen Verfahren hier aufzuführen erscheint nicht sinnvoll. Diese Verfahren sind dem Fachmann hinreichend bekannt.

Aus der drahtgebundenen Nachrichtentechnik sind Amplitudenmodulationsverfahren bekannt, die mit Transformatoren als Kopplern oder Mischern arbeiten. Ein ähnliches Verfahren wird bei den Ringmodulatoren angewendet. Es sei hierzu auf die deutschen Auslegeschriften 12 o7 456, 12 27 o84, 12 35 384 und 12 59 4o9 verwiesen.

Nachteilig bei dem Resonatorensystem ist der hohe Aufwand. Es werden sehr viele Resonatoren benötigt, die außerdem auch noch abgeglichen sein müssen. Bei dem genannten System mit der getrennten Energie- und Kodeübertragung ist es entweder erforderlich, auf zwei verschiedenen Frequenzen oder nacheinander zu senden. Bei dem Verfahren mit verschiedenen Frequenzen sind in der Regel auch je zwei Antennen erforderlich.

Beim Nacheinandersenden muß der Kodeträger einen ausreichend großen Energiespeicher besitzen, um über genügend Reserven zum Senden zu verfügen.

Die bisher bekannten Verfahren zur Positionierung, Standort- oder Standlinienbestimmung des Kodeträgers sind nachteilig, da sie voraussetzen, daß der Kodeträger über eine eigene Energieversorgung verfügt. Die bekannten Verfahren bewerten in der Regel ein Meßsignal, das von einer Bake oder einem Bakensystem gesendet wird. Es wird häufig die Phase zweier Signale oder die Amplitude des Trägersignals bewertet. Auch die Anwendung des Radarsystems zur Entfernungsbestimmung ist ungeeignet, da der Kodeträger bei der vorliegenden Erfindung nicht als Reflektor arbeitet, sondern selbst aktiv wird und mit seinem Kode den Sender der Identifizierungseinrichtung beeinflußt.

Selbst die Verfahren der bekannten magnetischen Amplitudenmodulationen eignen sich nicht. Sie gehen davon aus, daß Signal- und Trägerfrequenzgenerator aus stabilen, voneinander unabhängigen Energiequellen gespeist werden und daß beide Generatoren auf den Mischer oder Übertrager (Transformator) direkt einwirken und somit ein moduliertes Signal für die Nachrichtenübertragung erzeugen.

Der Erfindung liegt die Aufgabe zugrunde, bei einer Anordnung der eingangs genannten Art einerseits den Kode des Kodeträgers sicher und ohne besondere Sende- und Empfangsumschaltung zu übertragen und andererseits aber auch den Antennen- und allgemeinen Bauteileaufwand gering zu halten.

Der Kode soll entweder durch Schalter oder feste Verdrahtung programmierbar oder einlesbar bzw. überschreibbar sein. Es soll ferner möglich sein, den Kodeträger zu orten, d.h. seinen Standort oder seinen Abstand in bezug auf die Identifizierungeinrichtung festzustellen. Außerdem sollten möglichst wenig Frequenzen belegt werden.

Die Aufgabe wird erfindungsgemäß durch die Ausbildung gemäß Kennzeichen des Anspruchs 1 gelöst.

Es ist zweckmäßig, wenn die Identifizierungseinrichtung die elektromagnetischen Wellen mit möglichst konstanter Frequenz und Amplitude abstrahlt. Die Abstrahleinrichtung ist eine Antenne. Bei den hier geeigneten Frequenzen von ca. 1o bis 1.000 kHz leisten besonders abgestimmte Ferritstabantennen gute Dienste. Wie sich noch zeigen wird, sollte die Güte Q nicht zu gering sein, sondern eher 2o bis 1oo betragen. Das Kodeträgerobjekt ist mit einer ähnlichen Antenne ausgestattet. Bei Annäherung der beiden Objekte kommt es zur Energieübertragung. Sobald der Abstand zwischen beiden Antennen genügend klein ist, reicht die Energie aus, den Kode auszulesen.

Über eine Schalt- oder Steuereinrichtung kann die Antenne gemäß Anspruch 2 mit dem Kode beschaltet werden. Je nach Schaltzustand stellt die Kodeträgerantenne für die Identifizierung eine andere Beeinflussung dar. Das von der Identifizierungseinrichtung erzeugte Feld wird durch den Kode geringfügig dadurch verändert, daß die Empfangsantenne mehr oder weniger Energie aufnimmt. Diese Veränderung äußert sich in einer Strom- oder Spannungsänderung in dem Antennenschwingkreis des Senders der Identifizierungseinrichtung. Die Kodeinformation ist schwach in das Energieübertragungssignal eingeprägt. Wie bei einer Amplitudenmodulation läßt sich das Kodesignal über Filter, Verstärker und Auswerter gewinnen. Es wird jetzt deutlich, daß für beide Antennen eine gewisse Güte erforderlich ist. Einerseits wird die Energieübertragung dadurch günstiger, andererseits reagiert der Schwingkreis der Sendeantenne bei hoher Güte in der Amplitude stärker auf eine gewünschte Feldbeeinflussung als ein Kreis mit geringer Güte. Die Höhe der Güte ist durch die Bauteile, den Temperaturanwendungsbereich sowie durch das Frequenzverhältnis von Energie- zu Kodesignal begrenzt. Bei Frequenzen von 1o bis 1.ooo kHz ist für die Energieübertragung nur die magnetische Komponente von Bedeutung. Es gelten die Antennengesetze im "Nahfeld". Der Abstand zwischen Kodeträger und Identifizierungseinrichtung ist sehr viel geringer als die Wellenlänge. Verhältnismäßig niedrige Frequenzen sind besonders geeignet, da hier bei den infragekommenden Abständen zwischen den Objekten Reflexionen praktisch ausgeschlossen sind. Außerdem ist die tatsächlich abgestrahlte Leistung in der Regel so gering, daß sie auf die Umgebung nicht störend wirkt. Auch aus diesem Grund hat die Fernmeldebehörde für diese Anwendung im allgemeinen nur Frequenzen bis 135 kHz freigegeben.

Der in dem Kodeträgerobjekt vorgesehene Energiewandler ist an den Empfängerantennenschwingkreis angekoppelt. Durch die Ankopplung und die dazugehörige Belastung wird der Schwingkreis gedämpft. Diese Bedämpfung ist sozusagen die notwendige "natürliche" Bedämpfung zur Energieumwandlung. Bei ausreichender Betriebsspannung beginnt das Kodeträgerschieberegister zu arbeiten. Über die Schalt- oder Steuereinrichtung wird die Empfangsantenne beschaltet. Die Antenne wird zwischen der natürlichen Bedämpfung zur Energieumwandlung und einer entweder höheren oder tieferen Bedämpfung hin- und hergeschaltet. Da praktisch nur während der natürlichen Bedämpfung Energieübertragung möglich ist, muß ein Energiereservespeicher dafür sorgen, daß auch während der Energiepausen genügend Spannung für das Schieberegister und für die Schalteinrichtung zur Verfügung steht. Als Energiespeicher eignet sich ein Kondensator. Wegen des geringen Energiebedarfs bieten sich als Kodespeicher C-Mos-Bausteine an.

Der Kodeträger gibt eine Information drahtlos weiter. Er ist jedoch kein Sender im üblichen Sinn. Im allgemeinen bezeichnet man in der drahtlosen Nachrichtentechnik nur Hochfrequenzgeneratoren, die moduliert werden, als Sender. Der Kodeträger erzeugt selbst jedoch keine Hoch- oder Trägerfrequenz.

Um die Empfangsantenne auf möglichst einfache Weise mit dem Kode zu beeinflussen, eignet sich nach einer weiteren Ausbildung der Erfindung (Anspruch 3 ) eine Schalt- oder Steuereinrichtung, die die Antenne kurzschließen oder zumindest niederohmig abschließen kann. Als eine solche Einrichtung bietet sich ein Transistor an.

Um die Empfangsantenne bei der Beeinflussung durch den Kode möglichst wenig zu belasten, eignet sich nach einer weiteren Ausbildung der Erfindung (Anspruch 4 ) eine Schalt- oder Steuereinrichtung, die die Antenne vollständig oder zumindest teilweise von der natürlichen Belastung durch den Energiewandler trennt. Mit teilweisem Trennen ist hier das In-Reihe-Schalten eines Widerstandes oder das teilweise Sperren eines in Reihe geschalteten Transistors gemeint.

Um auch eine Reihe von gleichen Bits übertragen zu können, läßt sich nach einer weiteren Ausgestaltung der Erfindung (Anspruch 5) mittels eines Kodewandlers jedes vom Kodespeicher ausgelesene Informationsbit in einen Bitwechsel umsetzen. $\emptyset$ kann in $\emptyset 1$ und 1 in $1\emptyset$ oder umgekehrt umgesetzt werden. Im Gegensatz zur Pulslängenumwandlung liegt die Information nicht in der Länge der Takte, sondern im Bitwechsel. $\emptyset$-und 1-Bit sind gleich lang.

Eine weitere Ausgestaltung der erfindungsgemäßen Lösung ist im Anspruch 6 gekennzeichnet.

Für die überschreibbaren Kodeträger werden elektrisch überschreibbare Speicher benötigt. Die älteren Formen sind bistabile Relais und Ringkernspeicher. Neuerdings gibt es auch sogenannte EEPROMs, die die Information ohne Energiepuffer bis zu 1o Jahren behalten können. Wichtig für die Anwendung ist, daß diese Speicher keine Energie zum Erhalten der Information benötigen. Die gesamte benötigte Energie wird durch den Kodeschreiber bzw. Kodeidentifizierer geliefert. Zum Einlesen der neuen Information ist es notwendig, daß der Kodeträger aktiviert wird. Erst wenn genügend Energie für Empfänger, Demodulator, Signalaufbereiter und Kodespeicher zur Verfügung steht, kann die neue Information übernommen werden. Der Kodeschreiber sendet ein moduliertes Signal, das vom Empfänger des Kodeträgers aufgenommen wird. Nach der Demodulation kann die Information direkt dem Kodespeicher zur Verfügung gestellt werden. Zweckmäßig ist es jedoch, über einen Prüf- oder Startkode (Kodeprüfer) den Anfang der Information zu signalisieren. Durch diese Maßnahme wird der Kodespeicher getriggert und kann mit einem Taktsignal die Information an definierten Speicherstellen übernehmen. Durch Verwendung verschiedener Prüf- oder Startkodes ist es auch möglich, nur bestimmte Speicherstellen und auch nur bestimmte Kodeträger zu adressieren.

Gemäß einer anderen Weiterbildung der Erfindung (Anspruch 7) ist für den Kodeschreiber und Identifizierer dieselbe Antenne vorgesehen, wobei zum Senden der Kodeinformation die Trägerfrequenz verwendet wird, die auch zum Über-

tragen der Energie benötigt wird. Ferner ist auch für den Kodeträger zum Ein- und Auslesen dieselbe Antenne vorgesehen.

Je nach Art der Beschaltung der Kodeträgerantenne durch die Schalt- oder Steuereinrichtung kann es erforderlich sein, die Beschaltung der Antenne während des Einlesens der neuen Information aufzuheben. Es darf z.B. die Antenne während des Einlesens nicht kurzgeschlossen werden. Mit anderen Worten : Während des Einlesens wird keine Information ausgelesen. Eine relativ einfache Möglichkeit ist es, dem Kodeträger zum Einlesen mehr Energie, d.h. hier eine höhere Spannung zur Verfügung zu stellen. Beim Erreichen eines bestimmten Schwellwertes wird dann die Schalt- oder Steuereinrichtung passiv. Die Antenne ist dann nur noch durch den Energieumwandler und mit dessen Last belastet.

Die Ermittlung des Abstandes zwischen Kodeträger und Identifizierungseinrichtung erfolgt durch die weitere Ausbildung der Erfindung gemäß Anspruch 9. Es wird der Modulationsgrad des an dem Auswerter anstehenden Signals bewertet. Der Modulationsgrad hängt ab vom Abstand. Mit abnehmendem Abstand nimmt der Modulationsgrad zu. Nach der AM-Demodulation, Verstärkung und Gleichrichtung erhält man ein analoges Signal, das dem Modulationsgrad entspricht. Der Abstand läßt sich somit auf einige Prozent oder Promille genau bestimmen. Die Genauigkeit hängt auch von der Ausführung und dem Aufbau des Systems ab. Die Gleichrichtung ist nicht unbedingt notwendig, aber vorteilhaft.

In den Ansprüchen 1o bis 12 sind weitere Ausgestaltungen der Erfindung gekennzeichnet.

Die Positionierung, Standort- oder Standlinienbestimmung benötigt zwei Empfangseinrichtungen. Wie bei der Ermittlung des Abstandes wird der Modulationsgrad bewertet, allerdings von beiden Empfangseinrichtungen getrennt. Der Vergleich beider Signale kann vor oder nach der Gleichrichtung erfolgen. Wird die eine Amplitude negativ bewertet, so ergibt sich bei gleichen Beträgen eine Auslöschung. Hierdurch kann die Standlinie bestimmt werden.

Die Identifizierungseinrichtung kann mehrere Sendeeinrichtungen beinhalten, die mit gleicher Phasenlage arbeiten und den Kodeträger aktivieren. Die Sendeeinrichtungen können von den Empfangseinrichtungen getrennt sein. Bei zwei Sendeeinrichtungen ist es möglich, daß die Sendeeinrichtungen sich zum Positionieren je eine Antenne mit jeweils einer Empfangseinrichtung teilen. Wird nur eine Sendeeinrichtung verwendet, so wird deren Antenne möglichst mittig zwischen die Antennen der beiden Empfangseinrichtungen gesetzt. Desweiteren ist es möglich, von der Sendeeinrichtung beide Antennen der Empfangseinrichtungen parallel einzuspeisen oder nur in eine Antenne einzuspeisen. Im letzteren Fall muß jedoch die Unsymmetrie bei der Auswertung berücksichtigt werden.

Die mit der Erfindung erzielbaren Vorteile bestehen im wesentlichen darin, daß einerseits sowohl in der Identifiziereinrichtung als auch im Kodeträger nur eine Antenne notwendig ist und andererseits der Energiespeicher im Kodeträger sehr klein ist. Außerdem wird sofort bei Annäherung der Identifiziereinrichtung mit dem Auslesen des Kodes begonnen, ohne daß besondere Pausen zum Wiederaufladen des Energiespeichers erforderlich sind. Insbesondere durch die weitere Ausführung mit Anwendung eines Kodewandlers ist die Zeit, in der keine Energie in den Energiespeicher geladen werden kann, höchstens so lang, wie die Übertragung eines vollständigen Bits dauert. Hier gilt als vollständiges Bit die Informationseinheit vor der Umwandlung im Kodewandler. Durch diese Kodeumwandlung verringert sich die notwendige Kapazität des Energiespeichers wesentlich. Außerdem wird jedes Bit redundant übertragen. Die Übertragungssicherheit steigt erheblich.

Der Vorteil der Schalteinrichtung (Anspruch 3), die die Antenne kurz- oder niederohmig abschließt, liegt im einfachen Aufbau. Ein Transistor genügt.

Der Vorteil der vollständigen oder teilweisen Trennung vom Energiewandler (Anspruch 4) liegt in der Freischaltung der Antenne. Die Antenne kann wieder frei schwingen und somit selbst wieder elektromagnetische Energie im Schwingkreis speichern. Eine geringe Erhöhung der Reichweite ist dadurch möglich.

Vorteilhaft wirkt sich das System auch bei der Identifizierungseinrichtung aus. Der Energiesender ist ohne Unterbrechung eingeschaltet. Dadurch ergibt sich automatisch eine gute Frequenz und Amplitudenstabilität. Die Amplitude wird also im wesentlichen nur durch den Kodeträger beeinflußt. Als weiterer Vorteil gegenüber vergleichbaren Systemen ist die geringe Frequenzbeanspruchung zu nennen. Lediglich die Frequenz zur Energieübertragung sowie die durch die Modulation bedingten Seitenbänder entstehen. Die Bandbreite hängt von der Datenübertragungsrate ab.

Der Kodeträger läßt sich besonders klein aufbauen. Bei hoher Integration kann der Raumbedarf etwa 1 cm$^3$ betragen.

Je nach Ausgestaltung ergeben sich neben der Luftspule verschiedene Antennenformen für die Induktivität der Antenne. Kerne aus Ferriten oder Trafoblechen sind besonders geeignet.

Bei Energiestrahlern, die mit tiefen Frequenzen arbeiten, läßt das Energiefeld mit zunehmender Entfernung vom Strahler schnell nach. Selbst große Störsignalerzeuger wie Schweiß- und Schaltstationen stören nur in unmittelbarer Nähe der Identifizierungseinrichtung.

Der Vorteil überschreibbarer Kodeträger (s.Anspruch 6) gegenüber nicht überschreibbaren Kodeträgern liegt darin, daß der Kodeträger einer Maschine, einem Behälter, einer Person oder einem sonstigen Objekt zugeordnet werden kann und sich ändernde Daten speichern kann, z.B. Informationen über den Inhalt eines Behälters wie Art und Anzahl der Teile, Gewicht, Farbe, Herkunft, Bestimmung und Fülldatum.

Bei Verwendung der gleichen Trägerfrequenz zum Ein- und Auslesen der Information in dem Kodeträger läßt sich in der Identifizierungseinrichtung und im Kodeträger für Sende- und Empfangseinrichtung die gleiche Antenne verwenden (vgl. Anspruch 7.). Hierdurch wird die Herstellung günstiger. Desgleichen wird Platz gespart, der im allgemeinen besonders im Kodeträger knapp ist.

Bevor eine neue Information in den Kodeträger eingelesen wird, ist es im Sinne des Anspruchs 8 häufig von großem Vorteil, zunächst einen Prüf- oder Startkode zu übermitteln. Mit diesem Prüfkode kann ein einzelner Kodeträger oder auch eine bestimmte Adresse im Kodeträger selektiv angesprochen werden.

In vielen Fällen ist die Abstandsermittlung zum Kodeträger vorteilhaft (vgl. Anspruch 9 bis 12). Hierdurch kann eine Maschine gesteuert werden, die das Objekt, an dem sich der Kodeträger befindet, bearbeitet. Automatische Lackiereinrichtungen können beispielsweise das sich nähernde Objekt erkennen - wodurch die Farbe bestimmt wird - und den Abstand zum Objekt ermitteln, um bei gegebenem Abstand den Spritzvorgang einzuleiten oder zu beenden. Für solche Anwendungen sind Lichtschranken oder induktive oder kapazitive Näherungsschalter häufig nicht geeignet.

Bei anderen Anwendungen reicht die Abstandsermittlung nicht aus. Hier wird eine Lösung zur Positionierung, Standort- oder Standlinienbestimmung nach dem Vergleichsverfahren über zwei Empfangseinrichtungen benötigt. Es ist in der Regel genauer. Außerdem läßt sich der Ort oder zumindest die Standlinie bestimmen. Dies ist mit dem Verfahren zur Abstandsbestimmung nur bedingt möglich, wenn die Bewegungsbahnen der Einrichtungen festliegen.

Bei der Verwendung einer einzigen Sendeeinrichtung ist es von Vorteil, daß sich Änderungen durch Temperatur oder Versorgungsspannungsschwankungen auf beide Empfangseinrichtungen gleich auswirken. Dadurch beeinflussen sie nicht oder kaum das Ausgangssignal.

Andererseits haben zwei Sendeeinrichtungen den Vorteil, daß sie die Antennen der Empfangseinrichtungen benutzen können, ohne diese ungleichmäßig zu belasten, und daß trotzdem beide Empfangseinrichtungen voneinander unabhängig sind.

Die Erfindung soll nachfolgend anhand einiger in der beigefügten Zeichnung dargestellter Ausführungsbeispiele der Erfindung näher beschrieben werden.

Es zeigt

Fig. 1  ein Blockschaltbild einer erfindungsgemäßen Anordnung,

Fig. 2  ein Prinzipschaltbild einer ersten Ausführungsform der Anordnung nach Fig. 1,

Fig. 3  ein Prinzipschaltbild einer weiteren Ausführungsform,

Fig. 4 ein Prinzipschaltbild einer in der erfindungsgemäßen Anordnung verwendeten Identifizierungseinrichtung,

Fig. 5 ein Diagramm des modulierten Trägersignals,

Fig. 6 ein Blockschaltbild einer Ausführungsform eines überschreibbaren Kodeträgers und

Fig. 7 ein Schaltbild der Identifizierungseinrichtung mit Standortbestimmung.

Gleiche Bauteile sind in den Figuren der Zeichnung mit den gleichen Bezugszeichen versehen.

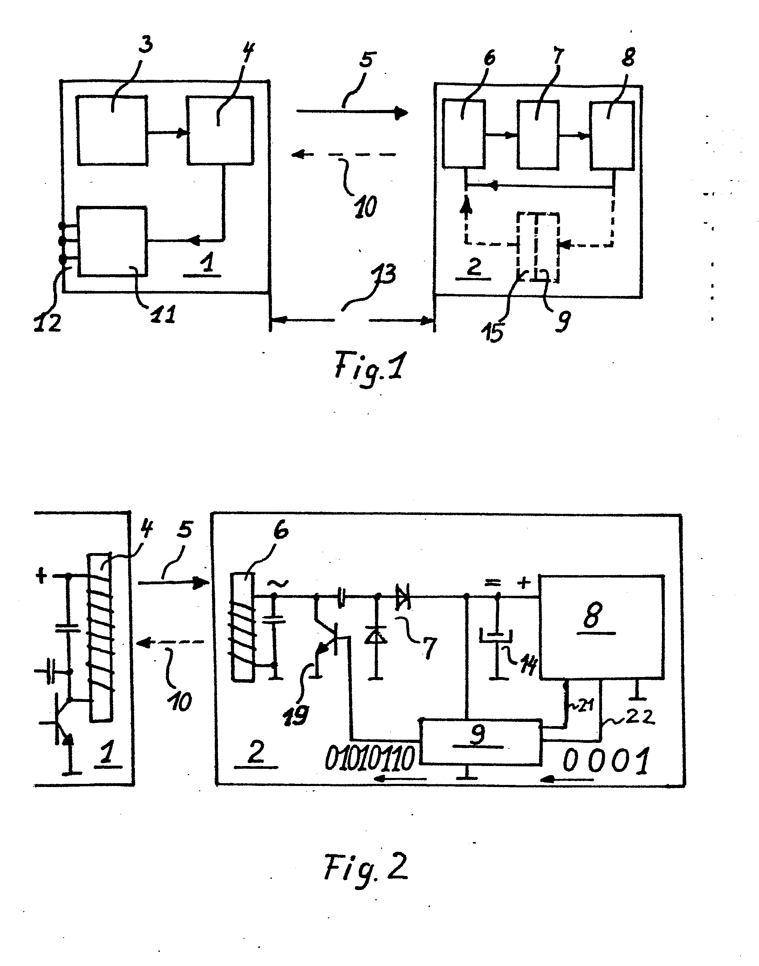

In Fig. 1 erzeugt eine Identifizierungseinrichtung 1 durch einen Oszillator 3 ein Signal, das nach der üblichen Verstärkung an eine Sendeantenne 4 gegeben wird. Das Signal wird hier abgestrahlt (Pfeil 5). Ein Teil der Energie wird von einer Antenne 6 eines Kodeträgers 2 aufgenommen. Die Energie wird umgesetzt in einem Energiewandler 7, und ein Energiespeicher wird geladen. Bei ausreichender Energie werden ein Kodespeicher 8 und ein dazugehöriger Taktgenerator aktiviert. Dem Kode entsprechend wird die Belastung der Antenne 6 geändert. Vorteilhaft ist die vorherige Umwandlung des Kodes durch einen Kodewandler 9, der eine Schalt- oder Steuereinrichtung 15 steuert (gestrichelt eingezeichnet), durch die die Belastung der Antenne 6    dem Kode entsprechend geändert wird. Durch die Beschaltung der Empfangsantenne 6 im Takt des Kodes wird die Sendeantenne 4 der Identifizierungseinrichtung 1 beeinflußt. Die Amplitude im Antennenschwingkreis der Identifizierungseinrichtung ändert sich entsprechend. Das Signal wird von einer Einrichtung 11 aufgenommen, in der es demoduliert und gegebenenfalls verstärkt und ausgewertet wird. Über Ausgänge 12 kann der Kode des Kodeträgers herausgegeben werden.

Bei der Ausführungsform nach Fig. 2 wird die Antenne 6 des Kodeträgers 2 durch einen Transistor 19 als Schalter je nach Signalzustand kurzgeschlossen oder durch den Energieumwandler 7 belastet. Der Energieumwandler 7 setzt mittels Dioden die Wechselspannung in eine Gleichspannung um. Als Energiespeicher dient ein Kondensator 14. Er sorgt dafür, daß der Kodespeicher 8 mit Taktgenerator und der mögliche Kodewandler 9 mit Energie versorgt werden. Während der Kurzschlußzeit der Antenne kann der Energieumwandler 7 keine Energie aufnehmen. Der Kodewandler 9 setzt die binären Signale aus dem Kodespeicher um. Es können dadurch auch Ø-Folgen oder 1-Folgen über Kapazitäten übertragen werden. Wenn Ø in Ø1 und 1 in 1Ø umgesetzt wird, bedeutet Ø11Ø, daß es sich um die Bits Ø,1 handelt. Somit ist das Signal eindeutig. Es können nicht mehr als zwei gleiche Zeichen aufeinander folgen. Der Energiespeicher 14 muß maximal die Zeit für zwei gleiche Zeichen überbrücken können. Es ist vorteilhaft, außer der eigentlichen Information auch eine Signalstart- und eine Signalstopinformation zu übertragen.

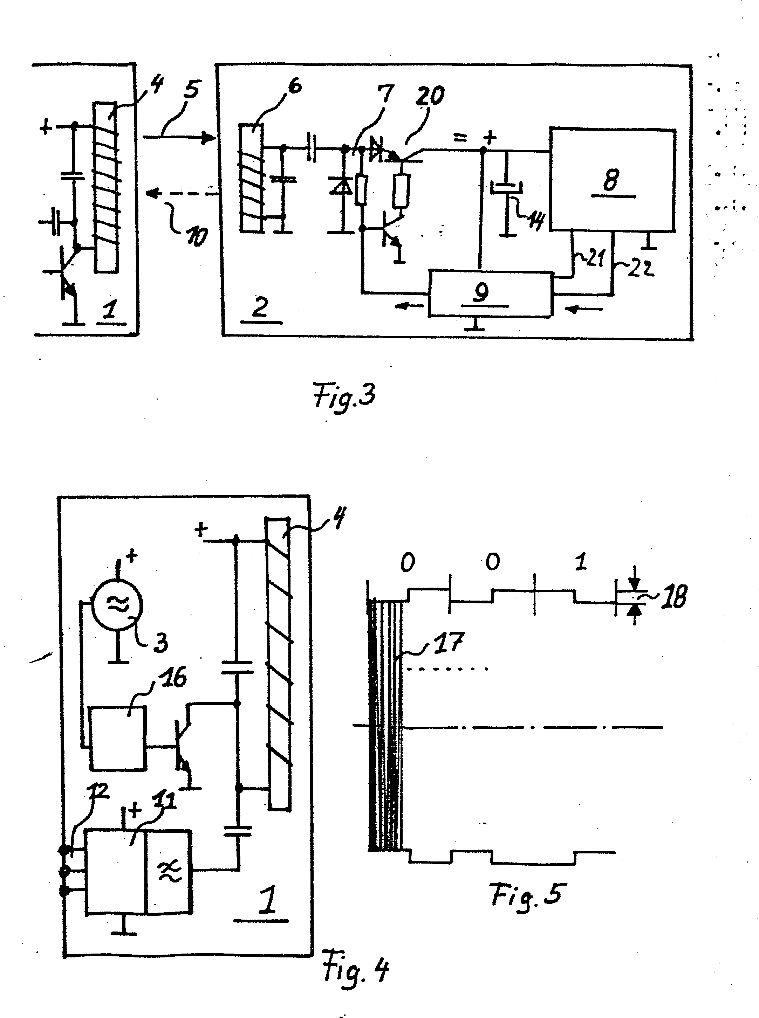

Fig. 3 zeigt eine Ausführungsform, bei der die Antenne 6 des Kodeträgers 2 entweder normal belastet wird oder von der Belastung durch einen Transistor 2o als Schalter getrennt wird. Die Schaltung ist etwas aufwendiger als die Schaltung nach Fig. 2. Es ist jedoch zu erkennen, daß die

Antenne durch das Sperren des Transistors fast völlig freigeschaltet wird. Die Widerstände sind hochohmig. Die mit dem Transistor 2o in Reihe geschaltete Diode kann wegfallen, wenn der Transistor sperrspannungsfest ist.

Fig. 4 zeigt das Prinzipschaltbild der Identifizierungseinrichtung 1. Der Oszillator 3 bestimmt die Frequenz.

Der Sender arbeitet im Dauerbetrieb. Frequenz und auch Amplitude 17 sind im wesentlichen konstant. Im Einflußbereich des Kodeträgers 2 erfolgt die Amplitudenmodulation 18. Über eine Kapazität wird das Kodeträgersignal dem Tiefpaßfilter (Demodulator) und den Verstärkern der Einrichtung 11 zugeführt.

Im Auswerter erfolgt die Entschlüsselung des kodierten Signals.

Das Diagramm nach Fig. 5 stellt die schwache Amplitudenmodulation 18 dar (geringer Modulationsgrad). Die Kodeinformation ØØ1 ist zu erkennen. Durch die Ausfilterung des Trägersignals 17 wird die Hüllkurve und damit die Kodeinformation gewonnen.

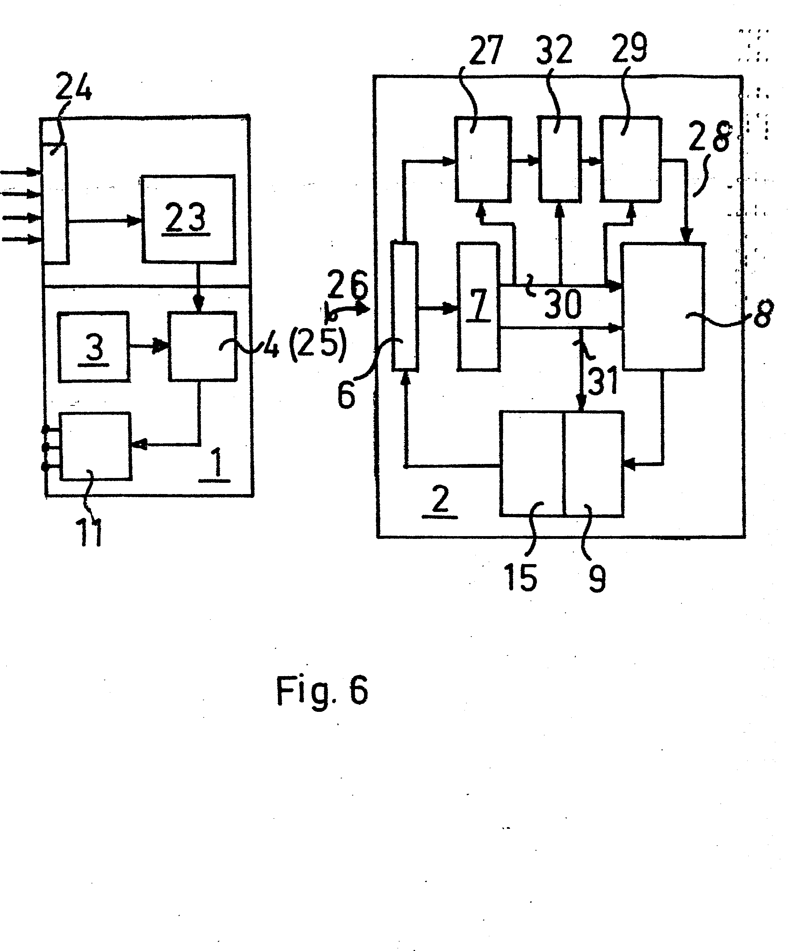

Das Blockschaltbild nach Fig. 6 zeigt einen Kodeleser 23 mit Identifizierungseinrichtung 1 sowie einen Kodeträger 2 mit einer Einrichtung zum Überschreiben des Kodespeichers 8.

Die neue Information wird von außen durch eine Eingabeeinrichtung 24 in den Kodeschreiber eingegeben. Bei paralleler Eingabe wird die Information in ein serielles Signal umgesetzt.

Schaltungen hierfür sind bekannt. Desweiteren besteht der Kodeschreiber aus einem Modulator, Trägerfrequenzoszillator und Treiber. Es können der Treiber und Oszillator der Identifizierungseinrichtung benutzt werden. Das gilt auch für die Antenne. Das Signal wird von der Empfangseinrichtung 6 des Kodeträgers übernommen. Der Wandler 7 setzt die Energie um. Sobald erkannt ist, daß es sich um einen Einlesevorgang handelt, kann das Beschalten der Antenne durch die Schalt- oder Steuereinrichtung 15 abgebrochen werden. Nach der Demodulation in einem Demodulator 27, der Signalaufbereitung in einer Einrichtung 32 und einer evtl. Prüfung in einer Prüfeinrichtung 29 wird die neue Information schließlich in einem Speicher 8 abgespeichert.

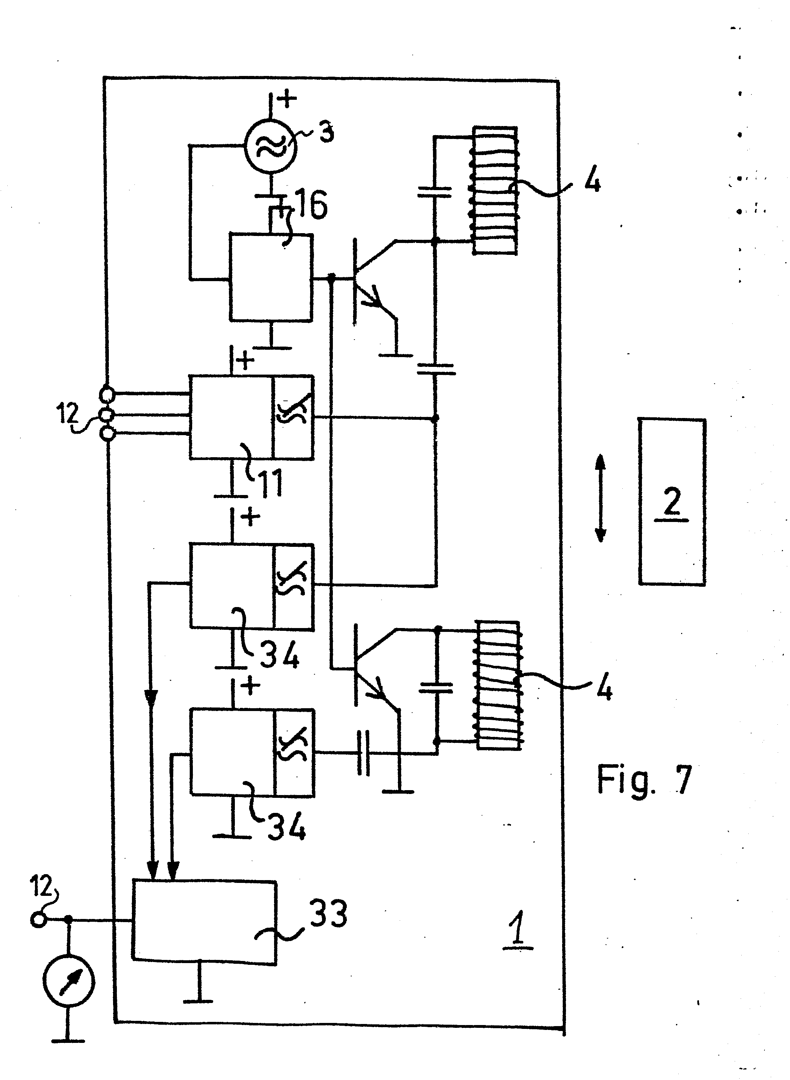

In der Fig. 7 ist eine Identifizierungseinrichtung 1 mit einer Ausbildung zur Standortsbestimmung gezeigt. Neben der normalen Identifizierung wird von jeder Empfangseinrichtung 4, 34 das AM-Signal zur Bewertung des Modulationsgrades entnommen. Die NF, d.h. die Kodeinformation wird verstärkt undgegebenenfalls gleichgerichtet. Beide Signale werden in einem Vergleicher 33 verglichen. Befindet sich der Kodeträger zwischen beiden Empfangseinrichtungen, so ist die Differenz beider Signale in der Regel Null.

# LEINE & KÖNIG

### PATENTANWÄLTE

Dipl.-Ing. Sigurd Leine · Dipl.-Phys. Dr. Norbert König

Burckhardtstraße 1
D-3000 Hannover 1

Telefon (05 11) 62 30 05

Götting KG

| Unser Zeichen | Datum |
|---|---|
| 619/3 EP | 14. November 1983 |

## Patentansprüche

1. Anordnung zum Identifizieren eines Objektes mit einer Identifizierungseinrichtung (Kodeleser), die elektromagnetische Energie in Form von elektromagnetischen Wellen über eine Sendeeinrichtung abstrahlt, und mit einem auf dem zu identifizierenden Objekt angeordneten Kodeträger, der über eine Empfangseinrichtung die abgestrahlte Energie aufnimmt, dadurch gekennzeichnet, daß die Empfangseinrichtung (6) des Kodeträgers (2) dem Kode entsprechend zwischen verschiedenen Belastungen umschaltbar oder einstellbar ist, so daß sich mit der geänderten Belastung im Kodeträger das elektromagnetische Feld an der Energie abstrahlenden Sendeeinrichtung (4) der Identifizierungseinrichtung (1) entsprechend ändert, und daß die sich aus der Feldänderung ergebende niederfrequente Strom- oder Spannungsänderung hinsichtlich des darin enthaltenen Kodes ausgewertet wird.

2. Anordnung nach Anspruch 1, dadurch gekennzeichnet, daß Empfangs- und Sendeeinrichtung Antennen sind, daß nur je

Dr.K./H.

eine Antenne für den Kodeträger (2) und die Identifizierungseinrichtung (1) vorgesehen ist, daß der Kodeträger
(2) einen Energiewandler (7) aufweist, der die empfangene
Energie in Versorgungsenergie umsetzt, daß der Kode des
Kodeträgers (2) in einem Kodespeicher (8) abgespeichert ist,
aus dem er auslesbar und einer Schalt- oder Steuereinrichtung (15) zur Änderung der Belastung der Empfangsantenne
(6) zuführbar ist, und daß aus der Amplitude der niederfrequenten Strom- und Spannungsänderung (Modulationsgrad) der
Abstand (13) zwischen dem Kodeträger (2) und der Identifizierungseinrichtung (1) ermittelbar ist.


3. Anordnung nach Anspruch 1 oder 2, dadurch gekennzeichnet,
daß durch die Schalt- oder Steuereinrichtung (15) zwei Belastungszustände schaltbar sind, von denen der eine Zustand
durch Kurzschluß oder zumindest einen niederohmigen Abschluß
der Empfangsantenne (4) und der andere Zustand durch die
normale Ankopplung an den Energiewandler (7) und die damit
verbundene Belastung durch die Schaltung erreicht wird.


4. Anordnung nach Anspruch 1 oder 2, dadurch gekennzeichnet,
daß durch die Schalt- oder Steuereinrichtung (15) zwei Belastungszustände schaltbar sind, von denen der eine Zustand
durch vollständiges Trennen oder zumindest teilweises Trennen
vom Energiewandler (7) und der andere Zustand durch die normale Ankopplung an den Energiewandler und die damit verbundene Belastung durch die Schaltung schaltbar ist.


5. Anordnung nach einem der Ansprüche 1 bis 4, dadurch gekennzeichnet, daß der Kode aus binären Informationseinheiten besteht, die als O oder 1 definierbar sind und in einem Kodewandler (9) derart änderbar sind, daß zu jeder Informationseinheit mindestens eine Einheit mit anderem binären Zustand hinzukommt, und daß die Informationseinheiten der Schalt- oder Steuereinrichtung (15) zur Belastungsänderung der Empfangsantenne (6) des Kodeträgers (2) zuführbar sind.


6. Anordnung nach einem der Ansprüche 1 bis 5, dadurch gekennzeichnet, daß der Kode im Kodeträger (2) ganz oder teilweise überschreibbar ist, daß zusätzlich ein Kodeschreiber (23) vorgesehen ist, der Energie in Form von elektromagnetischen Wellen, die durch eine Kodeinformation (24) moduliert ist, über eine Sendeantenne (25) abgestrahlt (26), daß der Kodeträger (2) Energie und Kodeinformation des Kodeschreibers (23) über eine Empfangsantenne (6) oder über eine der Energieübertragung als auch der Informationsübertragung jeweils zugeordnete Antenne aufnimmt, daß der Kodeträger (2) einen Energiewandler zur Erzeugung der insgesamt benötigten Betriebsenergie aus der aufgenommenen Energie aufweist sowie einen Demodulator (27) zum Gewinnen der Kodeinformation, die in den Kodespeicher (8) einschreibbar und dort abspeicherbar ist.

7. Anordnung nach Anspruch 6, dadurch gekennzeichnet, daß der Kodeschreiber (23) Teil der Identifizierungseinrichtung (2) ist und daß für den Kodeschreiber und die Identifizierungseinrichtung eine gemeinsame Antenne (4, 25) vorgesehen ist, daß der Kodeträger (2) zum Empfang des modulierten Kodeinformationssignals zum Überschreiben (26) und des nicht modulierten Signals zur Energieübertragung (5) gegebenenfalls zusätzlich zur Identifizierung dieselbe Empfangsantenne (6) aufweist und daß sowohl zur Identifizierung als auch zur Überschreibung dieselbe Frequenz oder benachbarte Frequenzen verwendet werden.

8. Anordnung nach Anspruch 6 oder 7, dadurch gekennzeichnet, daß außer der eigentlichen Kodeinformation für die Überschreibung auch ein gesonderter Prüf- oder Startkode übermittelt wird, der von einer Prüfeinrichtung (29) des Kodeträgers vor Einlesung der Kodeinformation auf Richtigkeit geprüft wird.

9. Anordnung nach einem der vorhergehenden Ansprüche, dadurch gekennzeichnet, daß die Identifizierungseinrichtung (1) einen Demodulator (34) zur Demodulation des kodemodulierten Signales aufweist und daß das durch die Demodulation gewonnene, gegebenenfalls verstärkte NF-Signal zur Ermittlung des Abstandes (13) direkt oder nach einer Gleichrichtung mit einem Referenzsignal in einer Vergleichseinrichtung (33) verglichen wird und als analoges Signal oder digitalisiert als digitales Signal am Ausgang (12) ansteht.

1o. Anordnung nach einem der vorhergehenden Ansprüche, dadurch gekennzeichnet, daß die Identifizierungseinrichtung (1) eine oder mehrere den Kodeträger (2) aktivierende Sendeeinrichtungen (3, 16, 4) aufweist, die mit gleicher Phasenlage arbeiten, und zwei das mit dem Kode modulierte Signal aufnehmende Empfangseinrichtungen (34, 4), daß wenigstens eine Empfangseinrichtung eine Aufbereitungs- und Auswerteeinrichtung (11) zum Erkennen des Kodesignales aufweist und daß die Amplituden der von beiden Empfangseinrichtungen (34) empfangenen Modulationssignale in der Vergleichseinrichtung (33) miteinander verglichen werden zur Ermittlung des Standortes oder der Standlinie des Kodeträgers (2) relativ zu den beiden Empfangseinrichtungen (34).

11. Anordnung nach Anspruch 1o, dadurch gekennzeichnet, daß das Vergleichssignal einer Einrichtung zur Ermittlung des Standortes oder der Standlinie nur bei Vorhandensein eines Kodesignales zugeführt wird.

12. Anordnung nach Anspruch 1o oder 11, dadurch gekennzeichnet, daß die Identifizierungseinrichtung (1) über zwei Sendeeinrichtungen mit Antennen (4) verfügt, daß von beiden Antennen Signale mit gleicher Phasenlage abgestrahlt werden und daß je einander zugeordneter Sende- und Empfangseinrichtung eine gemeinsame Antenne (4) vorgesehen ist.

Fig.1

Fig. 2

Fig. 3

Fig. 4

Fig. 5

Fig. 6

Fig. 7